# EUROPÄISCHE PATENTSCHRIFT

(11) **EP 1 148 607 B1**
(45) Veröffentlichungstag und Bekanntmachung des Hinweises auf die Patenterteilung: **15.06.2005**
(21) Anmeldenummer: 01440060.0
(22) Anmeldetag: 09.03.2001
(51) Int. Cl.: H02H 7/085, H02H 7/08

(54) **Uebertemperatur-Schutzschaltung für Drei-Phasen-Motor**
Excessive temperature protection circuit for a three phase motor
Circuit de protection contre une température excessive pour un moteur triphasé

(30) Priorität: 19.04.2000 DE 10019629
(43) Veröffentlichungstag der Anmeldung: 24.10.2001
(73) Patentinhaber: ALCATEL, 75008 Paris (FR)
(72) Erfinder: Thiele, Frank, 79848 Bonndorf (DE)
(74) Vertreter: Rausch, Gabriele, Dr.

(56) Entgegenhaltungen:
- EP-A- 0 456 874
- US-A- 3 930 186
- PATENT ABSTRACTS OF JAPAN vol. 17, no. 521 (E-1735), 20. September 1993 (1993-09-20) -& JP 05 137383 A (TOKYO ELECTRIC CO LTD), 1. Juni 1993 (1993-06-01)
- PATENT ABSTRACTS OF JAPAN vol. 9, no. 126 (E-318), 31. Mai 1985 (1985-05-31) -& JP 60 013492 A (SEIKO INSTR. & ELECTRONICS LTD), 23. Januar 1985 (1985-01-23)
- PATENT ABSTRACTS OF JAPAN vol. 7, no. 136 (E-181), 14. Juni 1983 (1983-06-14) -& JP 58 051793 A (HITACHI LTD), 26. März 1983 (1983-03-26)

## Beschreibung

Die Erfindung betrifft einen Drei-Phasen-Motor gemäß dem Oberbegriff des Anspruchs 1. Bei derartigen Motoren ist häufig ein Temperaturschutz derart vorzusehen, dass sich der Motor bei Überhitzung automatisch abschaltet. Das Überhitzungsproblem tritt vor allem Überlastung des Motors auf. Bekannt ist die Verwendung eines PTC (positive temperature coefficient resistor) als Temperaturfühler, der direkt in der Motorwicklung angeordnet ist und dessen Ausgangssignal entweder zwecks externer Überwachung mittels Leitungen nach außen geführt ist oder als Öffner zur Unterbrechung des Stromflusses fungiert. Bei externer Überwachung sind zusätzlich nach außen geführte Leitungen und eine entsprechende Auswerteschaltung erforderlich. Bei Einsatz des PTC als Öffner kann der Drei-Phasen-Motor immer noch mit zwei Phasen weiterlaufen. Daraus resultiert ein instabiler Zustand, der unbedingt zu vermeiden ist.

Aus der US 3,930,186 ist eine Schutzschaltung für bürstenlose Gleichstrommotoren bekannt, bei der die Ansteuerung der Transistoren für die Bestromung der Spulenwicklung mittels einer Spannung betrieben wird, die aus einer Hochfrequenz abgeleitet wird. Die Hochfrequenz wird über einen Transformator übertragen, dessen Übertragungsfaktor mit steigender Temperatur nahezu schlagartig drastisch abfällt. Damit werden dann alle Phasen gleichzeitig nicht mehr angesteuert.

Die Erfindung liegt die Aufgabe zugrunde, einen Drei-Phasen-Motor anzugeben, bei dem bei steigender Temperatur ebenfalls alle Phasen gleichzeitig ausfallen, der aber mit weniger aufwendigen Elementen auskommt.

Diese Aufgabe wird erfindungsgemäß gelöst durch einen Drei-Phasen-Motor nach der Lehre des Anspruchs 1. Durch die Einwirkung des Temperaturfühlers auf die Stromversorgung des Winkelkodierers und nicht auf die Bestromung einer Phase, ist bei Überschreitung eines voreingestellten Temperaturschwellwertes eine Motorabschaltung garantiert, da der Winkelkodierer mit der Kommutierungslogik zusammenwirkt und quasi über das Zwischenglied Kommutierungslogik zu einem Sperren der Endstufe führt. Wurde der Winkelkodierer wegen Motorüberhitzung von seiner Stromversorgung getrennt, entsteht in der Kommutierungslogik ein nichtdefinierter Zustand, der an der Endstufe des Motors eine Art Havariesignal generiert, wodurch die Endstufe gesperrt und damit der Motor abgeschaltet wird. Auf diese Weise ist ein Weiterlaufen des Motors auf zwei Phasen ausgeschlossen.

Als Temperaturfühler ist vorzugsweise ein PTC (positive temperature coefficient resistor) oder auch ein NTC (negativ temperature coefficient resistor) vorgesehen. Denkbar wäre jedoch auch, den wärmebedingten Schaltvorgang zur Unterbrechung der Stromversorgung des Winkelkodierers über einen bimetallisch ausgeführten Schalter, der in der Erhitzungszone angeordnet ist, zu realisieren.

Vorzugsweise ist der Winkelkodierer als Hallsensor-Schaltung ausgebildet, wobei zwischen der Stromversorgung der Hallsensor-Schaltung und den Ausgängen der Hallsensoren jeweils Pull-up-Widerständen vorgesehen sind. Überschreitet die Temperatur im Motor einen festgelegten Wert, wird mittels des temperaturbeaufschlagten Schalters die Stromversorgung der Hallsensoren unterbrochen. Vermittels der externen Pull-up-Widerstände kommt es dadurch zu einem Zustand, in dem alle Hallsensoren den "High"-Zustand melden. Dieser Zustand ist in der Kommutierungslogik nicht definiert und führt infolge dessen zu einem Sperren der Endstufe und damit letztlich zu einem Abschalten des Motors. Der Motor wird solange nicht mehr bestromt bis der Temperaturfühler nach Abkühlen des Motors die Stromversorgung der Hallsensoren wieder freigibt.

Die Erfindung wird nachfolgend anhand eines figürlich dargestellten Ausführungsbeispiels näher erläutert.

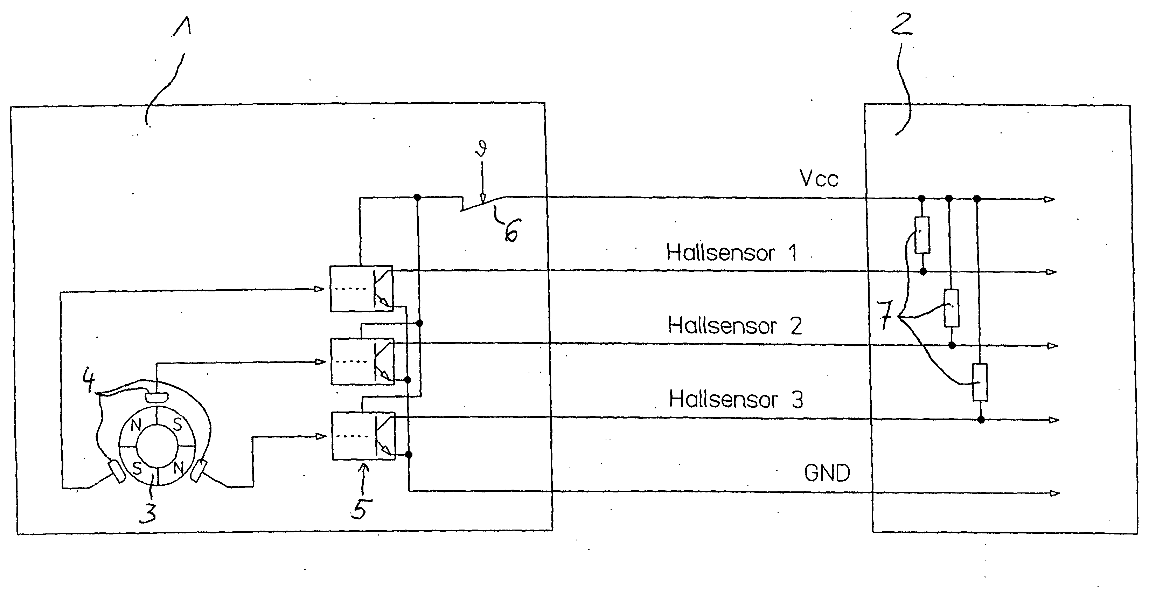

Die einzige Fig. zeigt eine schematische Darstellung einer Schaltung zur temperaturbedingten Abschaltung eines Drei-Phasen-Motors.

Die Schaltung besteht im wesentlichen aus einem motornahen Schaltungsteil 1 und einem externen Schaltungsteil 2. Ein Drei-Phasen-Motor 3 wird mit drei Hallsensoren 4 hinsichtlich seiner Rotorposition überwacht. Die Hallsensoren 4 sind dazu jeweils mit Hallsensor-Schaltungen 5 verbunden, welche das Ausgangssignal des Hallsensors 4 in ein zur Ansteuerung einer zum externen Schaltungsteil 2 gehörenden, nicht näher dargestellten Kommutierungslogik geeignetes Signal umformen. Die Stromversorgung der Hallsensor-Schaltung 5 erfolgt über einen Leitungskreis Vcc/GND. Im Vcc-Anschluss dieses Versorgungskreises ist ein temperaturbetätigter Schalter 6 angeordnet. Der Schalter 6 ist Bestandteil des motornahen Schaltungsteiles 1. Der externe Schaltungsteil 2 beinhaltet die gesamte Peripherelektronik des Drei-Phasen-Motors 3. Dazu gehören die Kommutierungslogik und die Endstufe. Figürlich veranschaulicht sind nur die für den Überhitzungsschutz des Drei-Phasen-Motors 3 notwendigen Komponenten, nämlich Pull-up-Widerstände 7, die den Vcc-Anschluss der Hallsensor-Schaltung 5 jeweils mit den Ausgangssignalleitungen der Hallsensoren 4 kurzschließen. Der Schalter 6 in dieser Vcc-Anschlussleitung wird von einem nicht dargestellten Temperaturfühler betätigt. Der Temperaturfühler ist in der Erhitzungszone des Drei-Phasen-Motors 3 angeordnet und kann beispielsweise als PTC (positive temperatur coefficient resistor) oder als Bimetallschalter ausgebildet sein. Überschreitet die Temperatur einen kritischen Grenzwert, wird durch das Ausgangssignal des Temperaturfühlers der Schalter 6 geöffnet, wodurch die Stromversorgung der Hallsensor-Schaltung 5 unterbrochen wird. Wird die Hallsensor-Schaltung 5 nicht mehr bestromt, kommt es durch die externen Pull-up-Widerstände 7 zu einem Zustand, in dem alle Hallsensoren 4 den "High"-Zustand melden. Da dieser Zustand in der Kommutierungslogik nicht definiert ist, wird automatisch die Endstufe gesperrt. Der Drei-Phasen-Motor ist jetzt außer Funktion. Es ist auch nicht möglich, dass der Drei-Phasen-Motor auf zwei Phasen weiterläuft. Erst wenn der Motor 3 unterhalb der kritischen Temperatur abgekühlt ist, verliert der Temperaturfühler seinen Einfluss auf den Schalter 6, so dass dann die Stromversorgung der Hallsensor-Schaltung 5 wieder freigegeben wird und der Motor 3 wieder anläuft.

Die Erfindung beschränkt sich nicht auf das vorstehend angegebene Ausführungsbeispiel. Vielmehr ist eine Anzahl von Varianten denkbar, welche auch bei grundsätzlich andersgearteter Ausführung von den Merkmalen der Erfindung gebrauch machen.

## Patentansprüche

1. Drei-Phasen-Motor mit einem Winkelkodierer zur Feststellung der Rotorposition und einer temperaturabhängigen Einheit, die der Unterbrechung der Stromversorgung des Winkelkodierers dient,
**dadurch gekennzeichnet,**
**dass** die temperaturabhängige Einheit eine Kombination aus einem Schalter (6) und einem diesen beaufschlagenden temperaturfühlenden Element (ϑ) ist.

2. Drei-Phasen-Motor nach Anspruch 1, **dadurch gekennzeichnet, dass** der Temperaturfühler als PTC (positive temperature coefficient resistor) ausgebildet ist.

3. Drei-Phasen-Motor nach einem der vorangehenden Ansprüche, **dadurch gekennzeichnet, dass** der Winkelkodierer als Hallsensor-Schaltung (5) ausgebildet ist.

4. Drei-Phasen-Motor nach Anspruch 3, **dadurch gekennzeichnet, dass** zwischen der Stromversorgung der Hallsensor-Schaltung (5) und den Ausgängen der Hallsensoren (4) jeweils Pull-up-Widerstände (7) vorgesehen sind.

## Claims

1. Three-phase motor, with an angle coder to determine the rotor position, and a temperature-dependent unit, which is used to interrupt the power supply of the angle coder,
**characterized in that**
the temperature-dependent unit is a combination of a switch (6) and a temperature-sensing element (9) which affects the switch (6).

2. Three-phase motor according to Claim 1, **characterized in that** the temperature sensor is in the form of a PTC (positive temperature coefficient resistor).

3. Three-phase motor according to one of the preceding claims, **characterized in that** the angle coder is in the form of a Hall sensor circuit (5).

4. Three-phase motor according to Claim 3, **characterized in that**, between the power supply of the Hall sensor circuit (5) and the outputs of the Hall sensors (4), pull-up resistors (7) are provided.

## Revendications

1. Moteur triphasé avec un codeur angulaire pour la définition de la position du rotor et avec une unité sensible à la température qui sert à l'interruption de l'alimentation électrique du codeur angulaire, **caractérisé en ce que** l'unité sensible à la température est une combinaison d'un commutateur (6) et d'un élément servant à capter la température (ϑ) et agissant sur celui-ci.

2. Moteur triphasé selon la revendication 1, **caractérisé en ce que** le capteur de température est configuré comme résistance à coefficient positif de température (PTC).

3. Moteur triphasé selon l'une quelconque des revendications précédentes, **caractérisé en ce que** le codeur angulaire est configuré comme circuit de capteurs à effet Hall (5).

4. Moteur triphasé selon la revendication 3, **caractérisé en ce que** des résistances pull-up (7) sont prévues respectivement entre l'alimentation électrique du circuit de capteurs à effet Hall (5) et les sorties des capteurs à effet Hall (4).
